# EUROPEAN PATENT APPLICATION

(11) **EP 2 743 049 A1**
(43) Date of publication of application: **18.06.2014**
(21) Application number: 11870582.1
(22) Date of filing: 11.08.2011
(51) Int. Cl.: B28B 3/26

(54) **MOLDING DIE AND METHOD FOR MANUFACTURING MOLDING DIE**

(71) Applicant: HODEN SEITMITSU KAKO KENKYUSHO CO., LTD., Atsugi-shi Kanagawa 243-0213 (JP)
(72) Inventor: NAKAGAWA, Dai, Kasugai-shi Aichi 480-0305 (JP)
(74) Representative: 2K Patentanwälte Blasberg Kewitz & Reichel
(86) International application number: PCT/JP2011/004546
(87) International publication number: WO 2013/021427

(57) **Abstract**

Provided are a low-cost and highly-precise structure-molding die that only requires a short production time, and a method of producing the die.

The die is characterized by including: a plate-like first member 10 that serves as a base; a second member 2 that has cells 2 of a shape matching a to-be-molded structure and is joined to the first member 10; molding grooves 7 that have a predetermined depth and are disposed between the cells 2; and a supply hole 6 that communicates with the first member 10 at a predetermined intersection of the molding grooves 7 from an opposite side from the cells 2 joined.

## Description

### Technical Field

The present invention relates to a structure-molding die for extrusion-molding a structure made of a ceramic material, which is used for a catalyst carrier for purifying exhaust gas of an automobile internal combustion engine, a fine-particle purification filter, a heat reservoir, and the like, and a method of producing the die, for example.

### Background Art

As for ceramic structures such as catalysts, a typical production method is of mixing powder of the ceramic material with a binder material to make kneaded clay, and continuously carrying out extrusion-molding through an extrusion die. Conventionally, in order to produce the extrusion die, what is disclosed is a technique for providing, from one surface, a supply hole for supplying the material by using a drill or the like, and providing, from the other surface, a slit groove by using a processing means of electro-discharge machining or the like in such a way that the slit groove communicates with the supply hole (Patent Document 1).

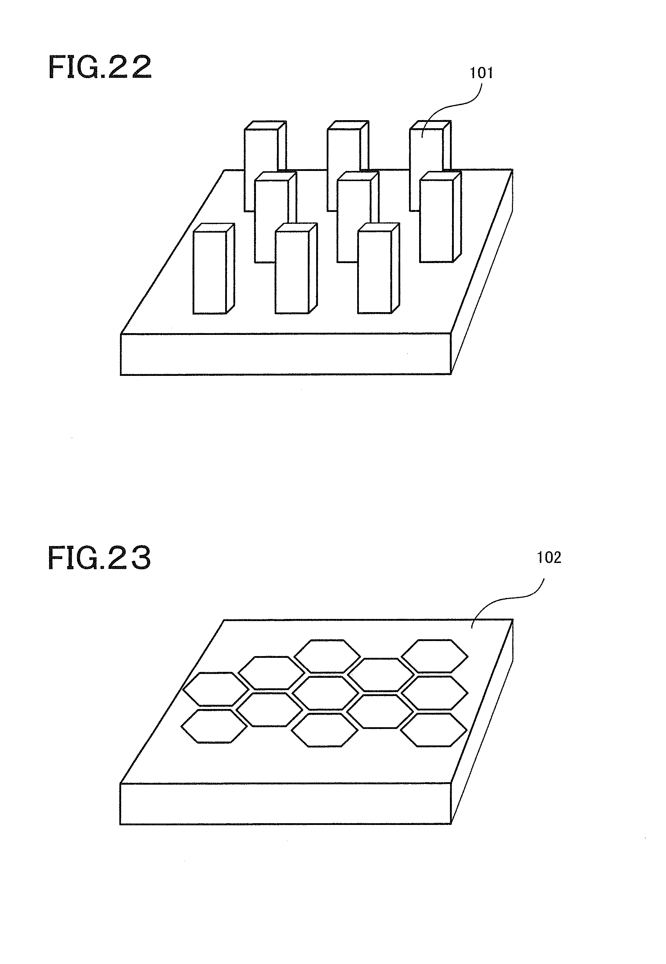

In particular, when the structure is of a complex shape, the slit groove is often provided by electro-discharge machining or the like. As for the method of providing the slit groove by using electro-discharge machining, a method of producing elongated electrodes 101 by grinding work or the like and discharging as shown in FIG. 22, and a method of producing processing-range electrodes 102 by wire-cut electro-discharge machining or the like and discharging as shown in FIG. 23 have been available.

### Prior Art Document

### Patent Document

Patent Document 1: JP57-61592B

### Summary of the Invention

### Problems to be Solved by the Invention

However, in the case of the method of producing the elongated electrodes 101 as shown in FIG. 22, if the width of the required slit grooves is narrow, it is difficult to produce the electrodes and a die. In the case of the electrodes 102 shown in FIG. 23, because the thickness of the electrodes is ensured, repeated use is possible. However, the performance of electro-discharge machining is poor, and it takes time to produce the electrodes. Furthermore, if a structure of a complex shape is molded, the production takes a long time, leading to an increase in costs.

The present invention has been made in view of the above circumstances. The object of the present invention is to provide a low-cost and highly-precise structure-molding die that enables production of fine slit grooves without using electrodes and tools in forming the slit grooves and only requires a short production time, and a method of producing the die.

### Means for Solving the Problems

A die of the present invention is characterized by including: a plate-like first member that serves as a base; a second member that has cells of a shape matching a to-be-molded structure and is joined to the first member; molding grooves that have a predetermined depth and are disposed between the cells; and a supply hole that communicates with the first member at a predetermined intersection of the molding grooves from an opposite side from the cells joined.

Moreover, a die of the present invention is characterized by including: a first member that has a plate section and a first cell of a shape matching a to-be-molded structure; a second member that has a second cell of a shape matching the to-be-molded structure and is joined to the first member; molding grooves that have a predetermined depth and are disposed between the first cell and the second cell; and a supply hole that communicates with the plate section of the first member at a predetermined intersection of the molding grooves from an opposite side from the first cell and the second cell joined.

Moreover, a die of the present invention is characterized by including: a first member that has a first plate section and a first cell of a shape matching a to-be-molded structure; a second member that has a second plate section and a second cell of a shape matching the to-be-molded structure, and is joined with the second cell being inserted into the first member; molding grooves that have a predetermined depth and are disposed between the first cell and the second cell; and a supply hole that communicates with the first plate section of the first member and the second plate section of the second member at a predetermined intersection of the molding grooves from an opposite side from the first cell and the second cell.

Furthermore, a method of producing a die of the present invention is characterized by including: a first step of processing a first member that serves as a base; a second step of processing cells of a shape matching a structure that is to be molded at a second member; a third step of joining the second member to the first member in such a way as to form molding grooves of a predetermined depth between the cells; and a fourth step of making a supply hole communicate with the first member at a predetermined intersection of the molding grooves from an opposite side from the cells joined.

Furthermore, a method of producing a die of the present invention is characterized by including: a first step of processing a first plate section of a first member and a first cell of a shape matching a to-be-molded structure; a second step of processing a second plate section of a second member and a second cell of a shape matching the to-be-molded structure; a third step of joining the second member to the first member in such a way as to form molding grooves of a predetermined depth between the first cell and the second cell; and a fourth step of making a supply hole communicate with the plate section of the first member at a predetermined intersection of the molding grooves from an opposite side from the first cell and the second cell joined.

The fourth step is characterized by including a step of cutting off the second plate section.

The second step is characterized by including a step of processing, in the second plate section, a first cell insertion hole into which the first cell is inserted; and the third step is characterized by including a step of inserting the first cell into the first cell insertion hole.

### Advantages of the Invention

As described above, according to the die of the present invention and the method of producing the die, it is possible to provide a low-cost and highly-precise structure-molding die that only requires a short production time, and a method of producing the die.

### Brief Description of the Drawings

FIG. 1 is a schematic diagram of a structure-molding die according to the present embodiment.
FIG. 2 is a diagram showing a first embodiment of a method of producing a structure-molding die.
FIG. 3 is a diagram showing a second embodiment of a method of producing a structure-molding die.
FIG. 4 is a diagram showing a third embodiment of a method of producing a structure-molding die.
FIG. 5 is a diagram showing a fourth embodiment of a method of producing a structure-molding die.
FIG. 6 is a diagram showing the fourth embodiment of a method of producing a structure-molding die.
FIG. 7 is a diagram showing the fourth embodiment of a method of producing a structure-molding die.
FIG. 8 is a diagram showing the fourth embodiment of a method of producing a structure-molding die.
FIG. 9 is a diagram showing the fourth embodiment of a method of producing a structure-molding die.
FIG. 10 is a diagram showing a fifth embodiment of a method of producing a structure-molding die.
FIG. 11 is a diagram showing the fifth embodiment of a method of producing a structure-molding die.
FIG. 12 is a diagram showing the fifth embodiment of a method of producing a structure-molding die.
FIG. 13 is a diagram showing the fifth embodiment of a method of producing a structure-molding die.
FIG. 14 is a diagram showing the fifth embodiment of a method of producing a structure-molding die.
FIG. 15 is a diagram showing a sixth embodiment of a method of producing a structure-molding die.
FIG. 16 is a diagram showing the sixth embodiment of a method of producing a structure-molding die.
FIG. 17 is a diagram showing the sixth embodiment of a method of producing a structure-molding die.
FIG. 18 is a diagram showing the sixth embodiment of a method of producing a structure-molding die.
FIG. 19 is a diagram showing the sixth embodiment of a method of producing a structure-molding die.
FIG. 20 is a diagram showing a seventh embodiment of a method of producing a structure-molding die.
FIG. 21 is a diagram showing an eighth embodiment of a method of producing a structure-molding die.
FIG. 22 is a diagram showing a conventional technique.
FIG. 23 is a diagram showing a conventional technique.

### Mode for Carrying Out the Invention

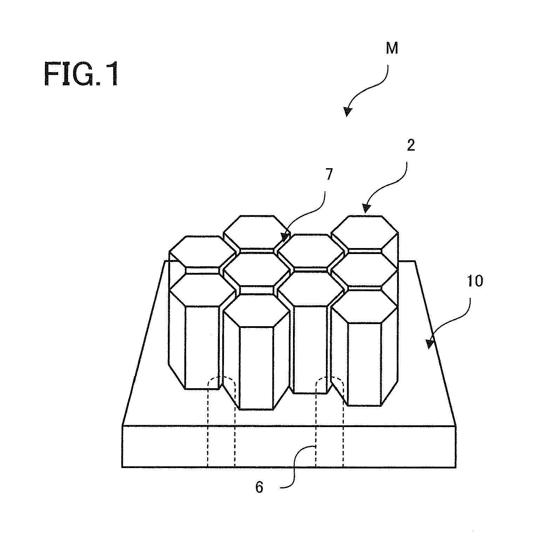

First, a structure-molding die of the present embodiment will be described. FIG. 1 is a schematic diagram of a structure-molding die according to the present embodiment.

As shown in FIG. 1, a structure-molding die M of the present embodiment includes a plate-like base 10, which works as a first member; cells 2, which have a shape matching that of a to-be-molded structure and are joined to the base 10 and which work as second members; molding grooves 7, which are so disposed as to have a predetermined depth between the cells 2; and supply holes 6, which communicate with the opposite side of the base 10 from the joined cells 2 at predetermined intersections of the molding grooves 7.

The base 10 is a plate-like member supporting the cells 2. The cells 2 are processed and produced so as to have a shape matching that of the structure through such processes as cutting, grinding, and drawing. Accordingly, the cells 2 can be processed separately from the base 10. Therefore, it is possible to produce even a complex shape for a short period of time. It is preferable that the base 10 be joined to the cells 2 by diffusion bonding, pulse electric current bonding, ultrasonic bonding, or the like. As the cells 2 are joined to the base 10, the molding grooves 7 are formed. The supply holes 6 for supplying materials are provided by drilling or the like from the opposite surface of the base 10 from the cells 2.

The following describes a method of producing the structure-molding die.

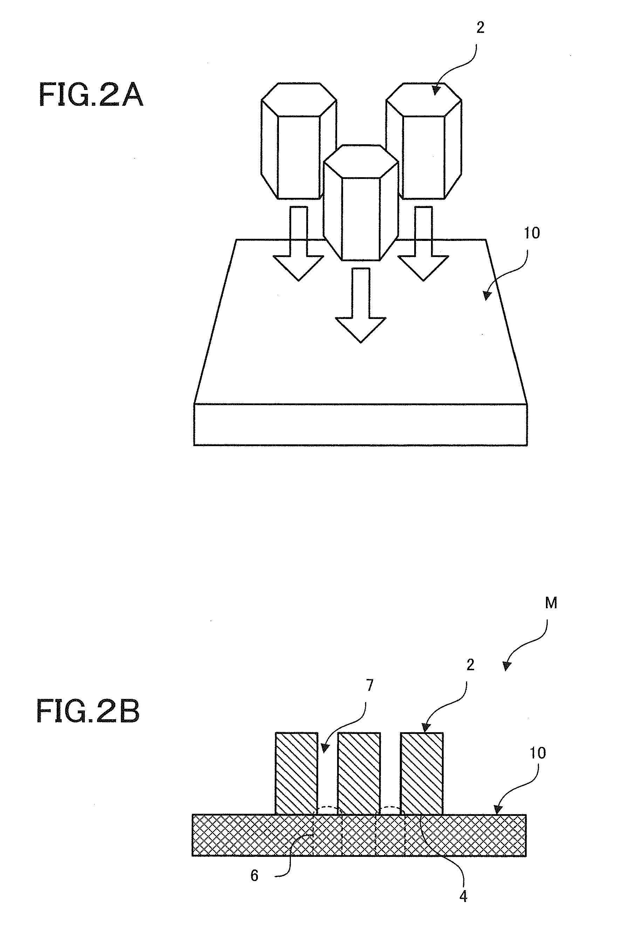

First, a first embodiment of a production method of the structure-molding die M will be described. FIG. 2 is a diagram showing the first embodiment of the production method of the structure-molding die.

According to the first embodiment, as shown in FIG. 2A, first, a first step of processing the base 10, which is a first member, in advance, and a second step of processing the cells 2, which are second members, in advance are carried out. Then, as shown in FIG. 2B, a third step of joining the cells 2 to the base 10 at a joint surface 4 to form molding grooves 7 of a predetermined depth between the cells 2 is carried out. Then, what is performed is a fourth step of drilling or performing any other operation to provide supply holes 6, which are for supplying materials, in the base 10 from the opposite surface of the base 10 from the cells 2.

The cells 2 are processed and produced in advance so as to have a shape matching that of the structure through such processes as cutting, grinding, and drawing. Accordingly, the cells 2 can be processed separately from the base 10. Therefore, it is possible to produce even a complex shape for a short period of time. It is preferable that the base 10 be joined to the cells 2 by diffusion bonding, pulse electric current bonding, ultrasonic bonding, or the like.

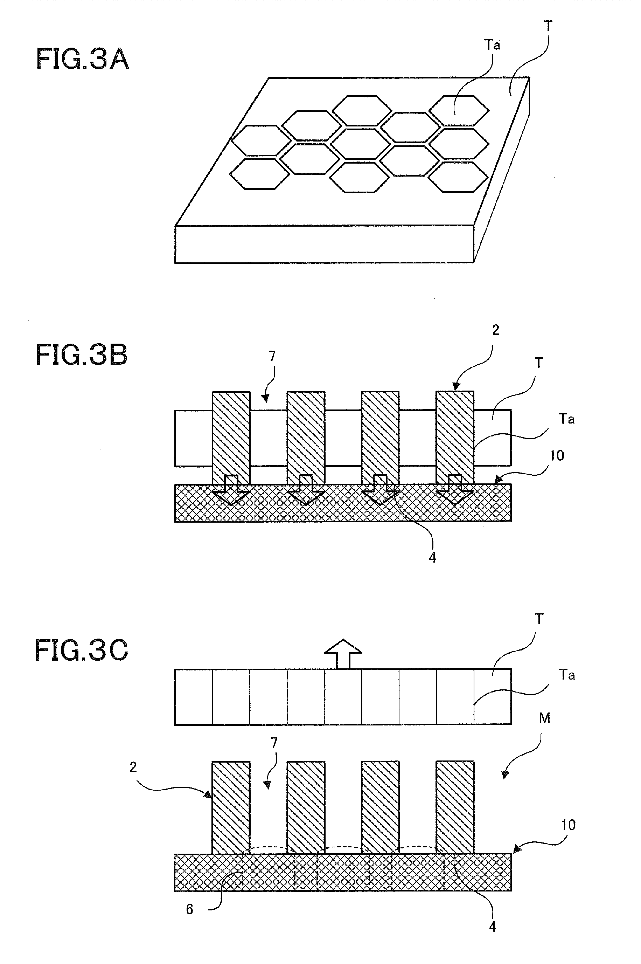

Then, a second embodiment of a production method of the structure-molding die M will be described. FIG. 3 is a diagram showing the second embodiment of the production method of the structure-molding die.

According to the second embodiment, first, as shown in FIG. 3A, what is performed is a step of providing holes Ta, which are so shaped as to allow a cell to pass therethrough, on a tray T made of ceramics or the like. Then, a step of processing the base 10, which is a first member, in advance, and a step of processing the cells 2, which are second members, in advance are carried out. Then, as shown in FIG. 3B, what is performed is a step of joining the cells 2 to the base 10 at the joint surface 4 with the cells 2 being inserted into the holes Ta of the tray T, thereby forming the molding grooves 7 of a predetermined depth between the cells 2. Then, as shown in FIG. 3C, a step of pulling out the tray T is carried out. Then, a step of drilling or performing any other operation to provide supply holes 6, which are for supplying materials, in the base 10 from the opposite surface of the base 10 from the cells 2 is performed. Incidentally, the step of providing the supply holes 6 may precede the step of pulling out the tray T.

The cells 2 are processed and produced in advance so as to have a shape matching that of the structure through such processes as cutting, grinding, and drawing. Accordingly, the cells 2 can be processed separately from the base 10. Therefore, it is possible to produce even a complex shape for a short period of time. It is preferable that the base 10 be joined to the cells 2 by diffusion bonding, pulse electric current bonding, ultrasonic bonding, or the like.

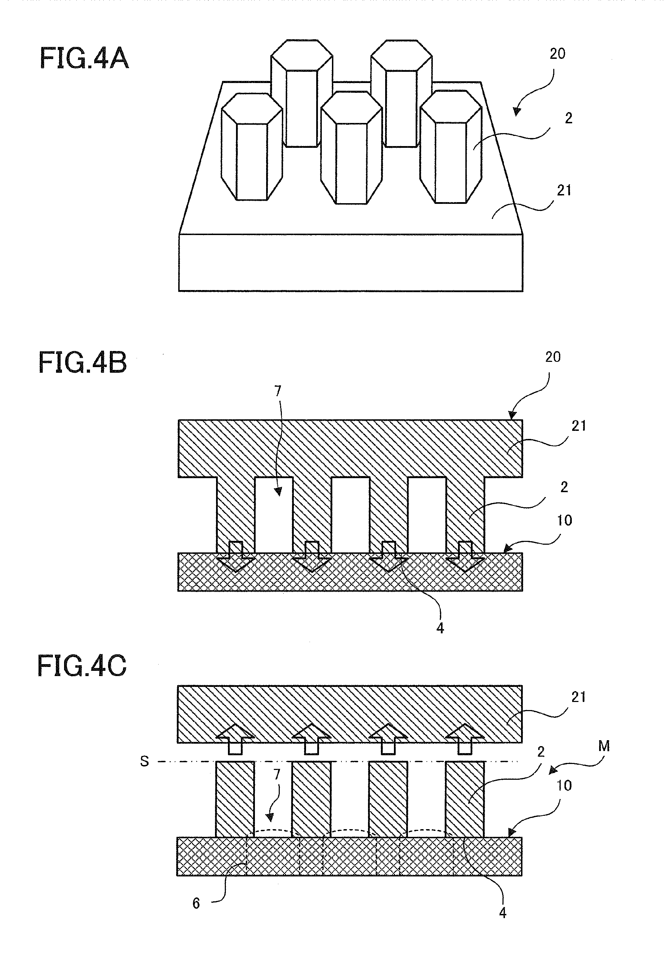

Then, a third embodiment of a production method of the structure-molding die M will be described. FIG. 4 is a diagram showing the third embodiment of the production method of the structure-molding die.

According to the third embodiment, first, a step of processing the base 10, which is a first member, in advance, and a step of cutting or grinding a plate 20, which is a second member, in advance as shown in FIG. 4A to produce the cells 2 of a shape matching that of the structure and a plate section 21 as an integral structure are carried out. Then, as shown in FIG. 4B, what is performed is a step of joining the cells 2 to the base 10, which is a first member, at the joint surface 4, thereby forming the molding grooves 7 of a predetermined depth between the cells 2. Then, as shown in FIG. 4C, a step of cutting along a cutting plane S to remove the plate section 21 is performed. Incidentally, the cutting plane S is a boundary between the cells 2 and the plate section 21, or is closer to the cells 2 than to the boundary. Then, a step of drilling or performing any other operation to provide supply holes 6, which are for supplying materials, in the base 10 from the opposite surface of the base 10 from the cells 2 is performed. Incidentally, the step of providing the supply holes 6 may precede the step of removing the plate section 21.

Accordingly, the cells 2 can be processed separately from the base 10. Therefore, it is possible to produce even a complex shape for a short period of time. It is preferable that the base 10 be joined to the cells 2 by diffusion bonding, pulse electric current bonding, ultrasonic bonding, or the like.

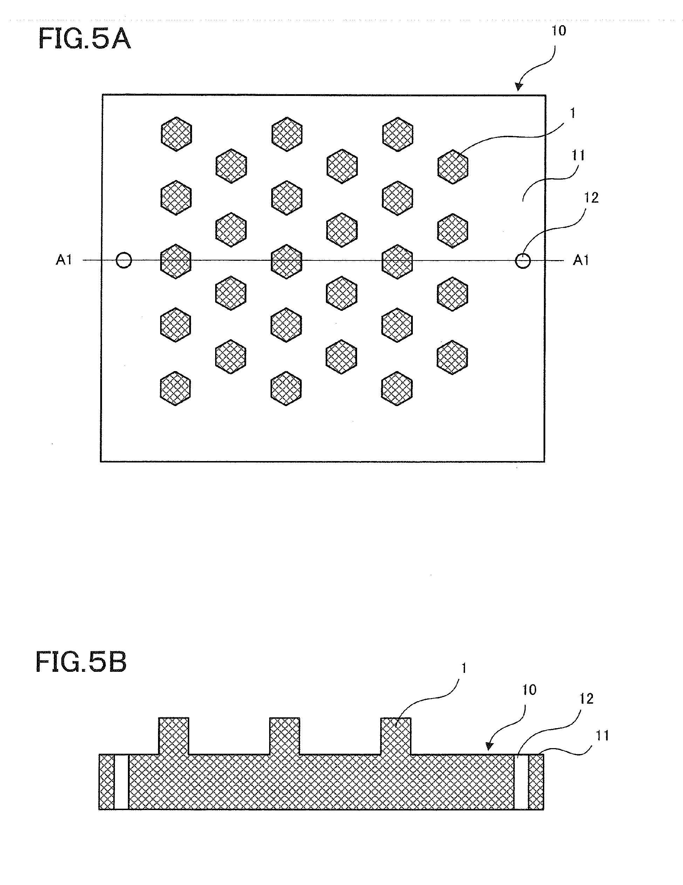

Then, a fourth embodiment of a production method of the structure-molding die M will be described. FIGS. 5 to 9 are diagrams showing the fourth embodiment of the production method of the structure-molding die.

FIG. 5A is a plane view of a first member. FIG. 5B is a cross-sectional view of FIG. 5A taken along A1-A1. As shown in FIG. 5A, one plate-like first member 10 is cut and ground; and first cells 1 of a shape matching that of the structure, and a first plate section 11 are produced as an integral structure. Moreover, as shown in FIG. 5B, in the first plate section 11, first through-holes 12 are formed.

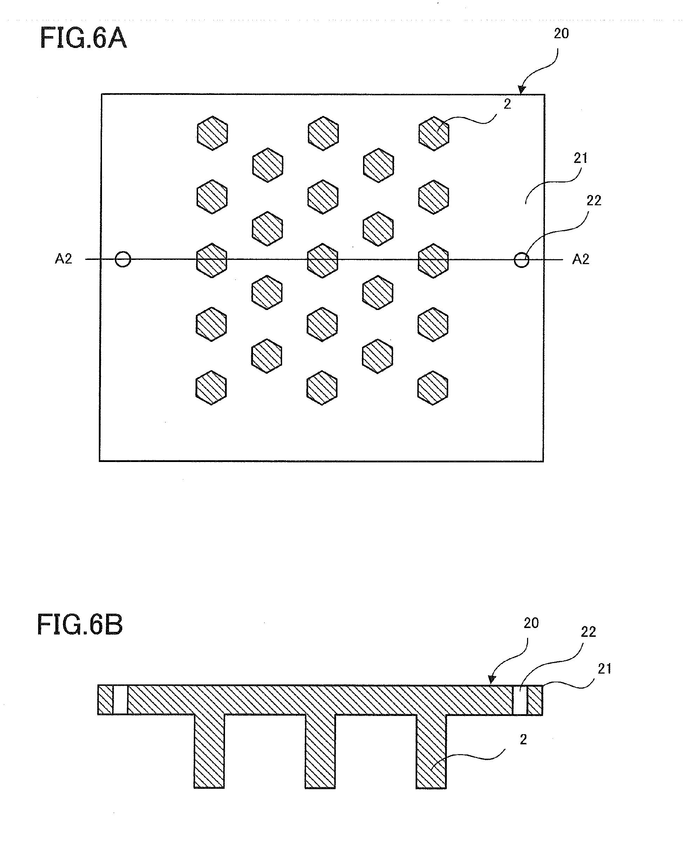

FIG. 6A is a plane view of a second member. FIG. 6B is a cross-sectional view of FIG. 6A taken along A2-A2. As shown in FIG. 6A, a second member 20 is cut and ground; and second cells 2 of a shape matching that of the structure, and a second plate section 21 are produced. Moreover, as shown in FIG. 6B, in the second plate section 21, second through-holes 22 are formed. Incidentally, the length of projections of the second cells 2 from the second plate section 21 is longer than the length of projections of the first cells 1 of the first member 10 from the first plate section 11 shown in FIG. 5B.

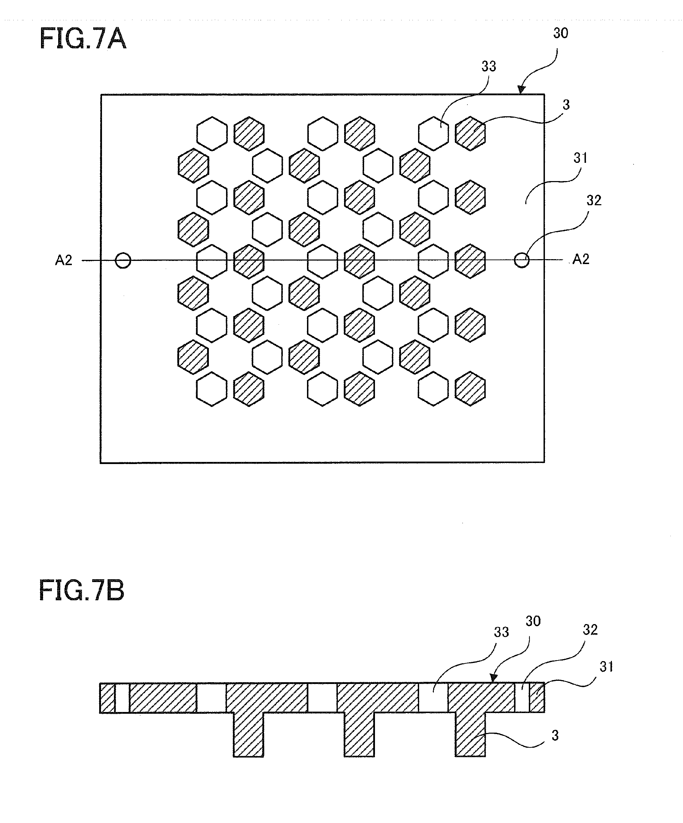

FIG. 7A is a plane view of a third member. FIG. 7B is a cross-sectional view of FIG. 7A taken along A3-A3. As shown in FIG. 7A, a third member 30 is cut and ground; and third cells 3 of a shape matching that of the structure, and a third plate section 31 are produced. Moreover, as shown in FIG. 7B, in the third plate section 31, third through-holes 32 are formed. Furthermore, second cell insertion holes 33 of a shape matching that of the structure are formed adjacent to the third cells 3 of the third plate section 31. Incidentally, the length of projections of the third cells 3 from the third plate section 31 is longer than the length of projections of the first cells 1 of the first member 10 from the first plate section 11 shown in FIG. 5B, and is shorter than the length of projections of the second cells 2 of the second member 20 from the second plate section 21 shown in FIG. 6B.

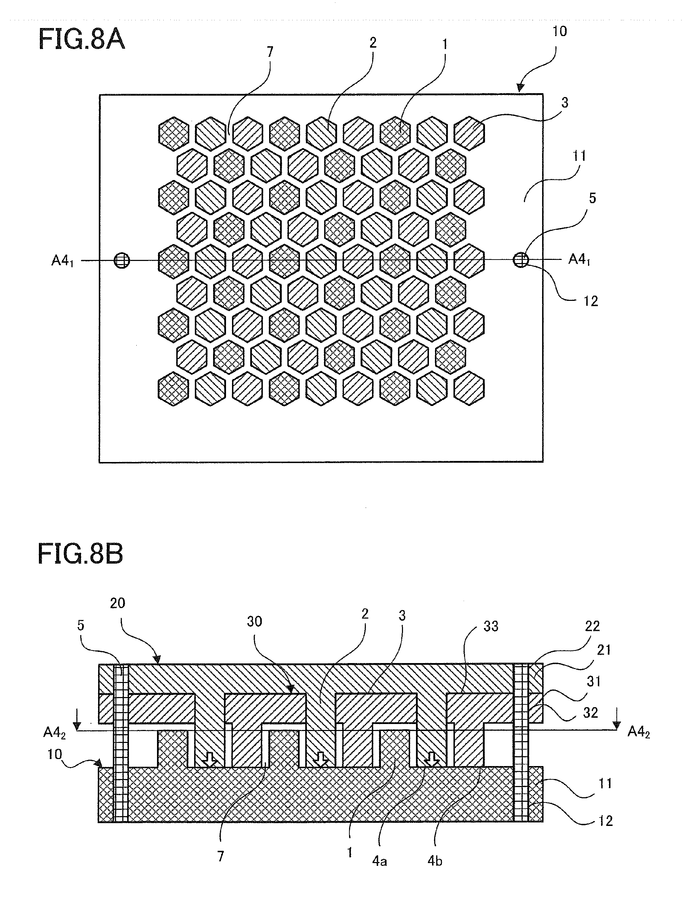

According to the fourth embodiment, the first member 10, second member 20, and third member 30 shown in FIGS. 5 to 7 are joined together to make a die M. FIG. 8 is a diagram showing a situation where the first member 10, the second member 20, and the third member 30 are joined together. FIG. 8A is a diagram showing an A4₂-A4₂ cross section of FIG. 8B seen from the direction of arrows, in a situation where the first member 10, the second member 20, and the third member 30 are joined together. FIG. 8B is a cross-sectional view of FIG. 8A taken along A4₁-A4₁ in the situation where the first member 10, the second member 20, and the third member 30 are joined together.

First, a step of processing the first member 10 shown in FIG. 5, and a step of processing the second member 20 shown in FIG. 6, and a step of processing the third member 30 shown in FIG. 7 are carried out. The step of processing the third member 30 contains a step of processing the second cell insertion holes 33.

Then, a step of joining the first member 10, the second member 20, and the third member 30 together is carried out.

First, a step of inserting the second cells 2 of the second member 20 into the second cell insertion holes 33 of the third member 30 is performed. As a result, the second member 20 is stacked on the third member 30. In the situation where the second member 20 is stacked on the third member 30, the second through-holes 22 communicate with the third through-holes 32.

Then, what is performed is a step of putting the stacked second and third members 20 and 30 on the first member 10 in such a way that the first cells 1 are disposed between the second cells 2 and the third cells 3.

In this state, into the second and third through-holes 22 and 32 that communicate with the first through-holes 12, connection members 5 are inserted. As the connection members 5 are inserted, the positions of the first member 10, second member 20, and third member 30 are determined. As shown in FIG. 8A, the first cells 1, the second cells 2, and the third cells 3 are accurately placed at positions corresponding to those of the structures. Incidentally, according to the present embodiment, the connection members 5 have a rod-shaped configuration to be inserted into the through-holes. Instead, the connection members 5 may have a configuration by which the first member 10, the second member 20, and the third member 30 are held therebetween in such a way as to align end portions of the first member 10, second member 20, and third member 30; any other configuration is available as long as the positions are determined.

In this state, the second cells 2 and the third cells 3 are in contact with the first plate section 11 of the first member 10. Incidentally, the first cells 1 may be in contact with the third plate section 31 of the third member 30, or stay away from the third plate section 31.

Then, a section where the second cell 2 is in contact with the first plate section 11 of the first member 10 is regarded as a first joint surface 4a, and a section where the third cell 3 is in contact with the first plate section 11 of the first member 10 is regarded as a second joint surface 4b. A step of joining the first member 10, the second member 20, and the third member 30 to form molding grooves 7 of a predetermined depth between the first, second, and third cells 1, 2, and 3 is performed.

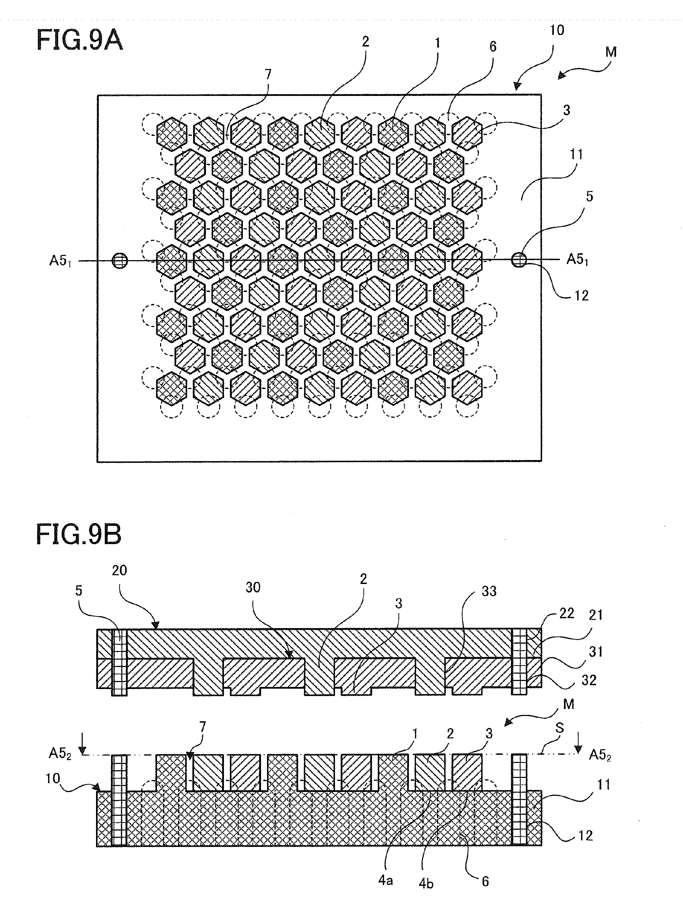

FIG. 9 is a diagram showing a structure-molding die of the fourth embodiment after the joining. FIG. 9A is a diagram showing an A5₂-A5₂ cross section of FIG. 9B seen from the direction of arrows, in a situation where the first member 10, the second member 20, and the third member 30 have been joined together. FIG. 9B is a cross-sectional view of FIG. 9A taken along A5₁-A5₁ in the situation where the first member 10, the second member 20, and the third member 30 have been joined together.

After the first member 10, the second member 20, and the third member 30 are joined together, a step of cutting the second and third cells 2 and 3 along a cutting plane S is carried out. It is preferred that the cutting plane S be a plane where the first cells 1, the second cells 2, and the third cells 3 are equal in height. For example, as shown in FIG. 9B, the second cells 2 and the third cells 3 may be cut in accordance with the height of the first cells 1; or the heights may be adjusted after the first cells 1, the second cells 2, and the third cells 3 all are cut. According to the present embodiment, the connection members 5 are cut together with the cells. However, the connection members 5 may be pulled out.

Then, a step of drilling or performing any other operation to provide supply holes 6, which are for supplying materials, in the first member 10 from the opposite surface of the first member 10 from the first, second, and third cells 1, 2, and 3 is performed. Incidentally, the step of forming the supply holes 6 may precede the step of cutting the second and third cells 2 and 3.

The die M produced by such a method includes: a first member 10 that includes a first plate section 11 and a first cell 1 of a shape matching that of a to-be-molded structure; a second member 20 that includes a second cell 2 of a shape matching that of the to-be-molded structure and is joined to the first member 10; and a third member 30 that includes a third cell 3 of a shape matching that of the to-be-molded structure and is joined to the first member 10; molding grooves 7 that have a predetermined depth and are disposed between the first cell 1, the second cell 2, and the third cell 3; and a supply hole 6 that communicates with the first plate section 11 of the first member 1 at a predetermined intersection of the molding grooves 7 from an opposite side from the first cell 1 and the second and third cells 2 and 3 joined.

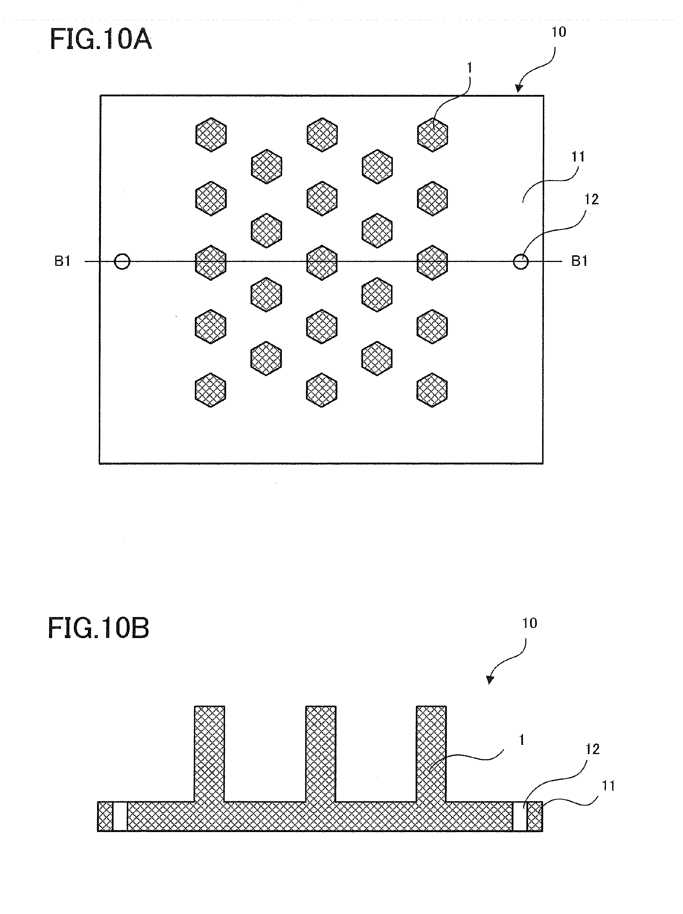

Then, a fifth embodiment of a production method of the structure-molding die M will be described. FIGS. 10 to 14 are diagrams showing the fifth embodiment of the production method of the structure-molding die.

FIG. 10A is a plane view of a first member. FIG. 10B is a cross-sectional view of FIG. 10A taken along B1-B1. As shown in FIG. 10A, one plate-like first member 10 is cut and ground; and first cells 1 of a shape matching that of the structure, and a first plate section 11 are produced as an integral structure. Moreover, as shown in FIG. 10B, in the first plate section 11, first through-holes 12 are formed.

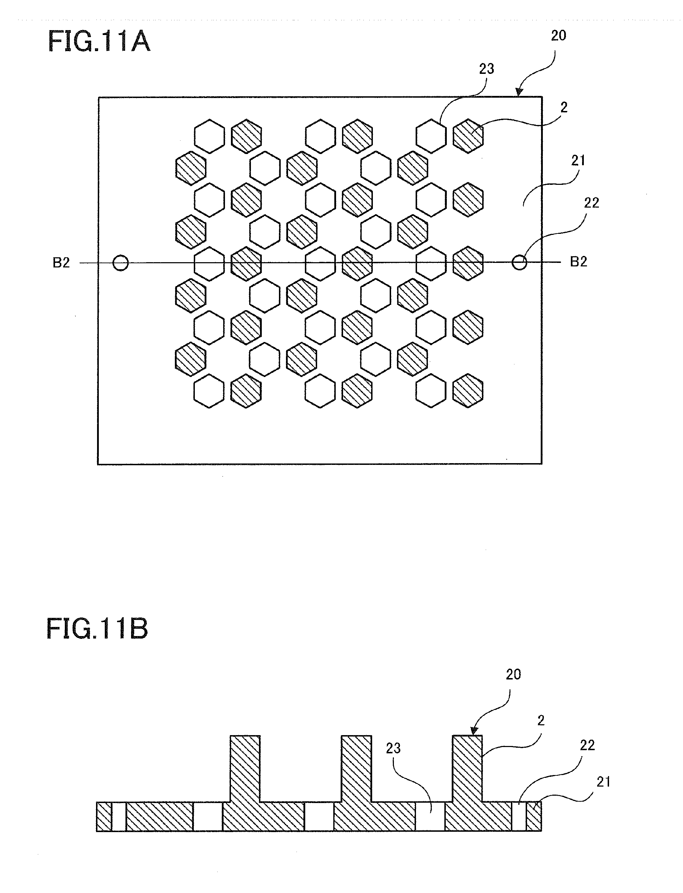

FIG. 11A is a plane view of a second member. FIG. 11B is a cross-sectional view of FIG. 11A taken along B2-B2. As shown in FIG. 11A, a second member 20 is cut and ground; and second cells 2 of a shape matching that of the structure, and a second plate section 21 are produced as an integral structure. Moreover, as shown in FIG. 11B, in the second plate section 21, second through-holes 22 are formed. Furthermore, first cell insertion holes 23 of a shape matching that of the structure are formed adjacent to the second cells 2 of the second plate section 21. Incidentally, the length of projections of the second cells 2 from the second plate section 21 is shorter than the length of projections of the first cells 1 of the first member 10 from the first plate section 11 shown in FIG. 10B.

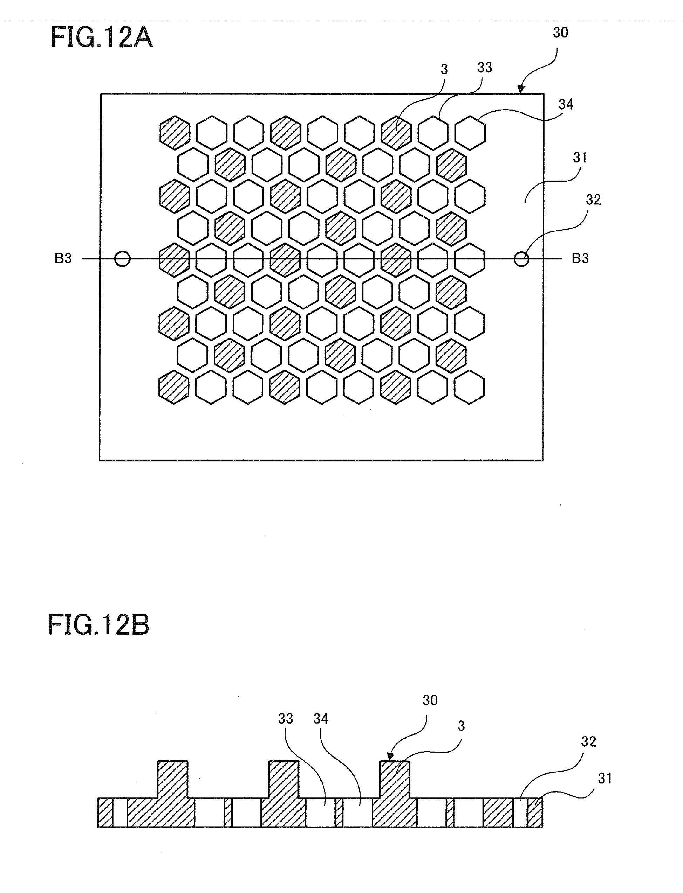

FIG. 12A is a plane view of a third member. FIG. 12B is a cross-sectional view of FIG. 12A taken along B3-B3. As shown in FIG. 12A, a third member 30 is cut and ground; and third cells 3 of a shape matching that of the structure, and a third plate section 31 are produced as an integral structure. Moreover, as shown in FIG. 12B, in the third plate section 31, third through-holes 32 are formed. Furthermore, first cell insertion holes 33 of a shape matching that of the structure are formed adjacent to the third cells 3 of the third plate section 31; second cell insertion holes 34 of a shape matching that of the structure are formed adjacent to the first cell insertion holes 33. Incidentally, the length of projections of the third cells 3 from the third plate section 31 is shorter than the length of projections of the first cells 1 of the first member 10 from the first plate section 11 shown in FIG. 10B, and is shorter than the length of projections of the second cells 2 of the second member 20 from the second plate section 21 shown in FIG. 11B.

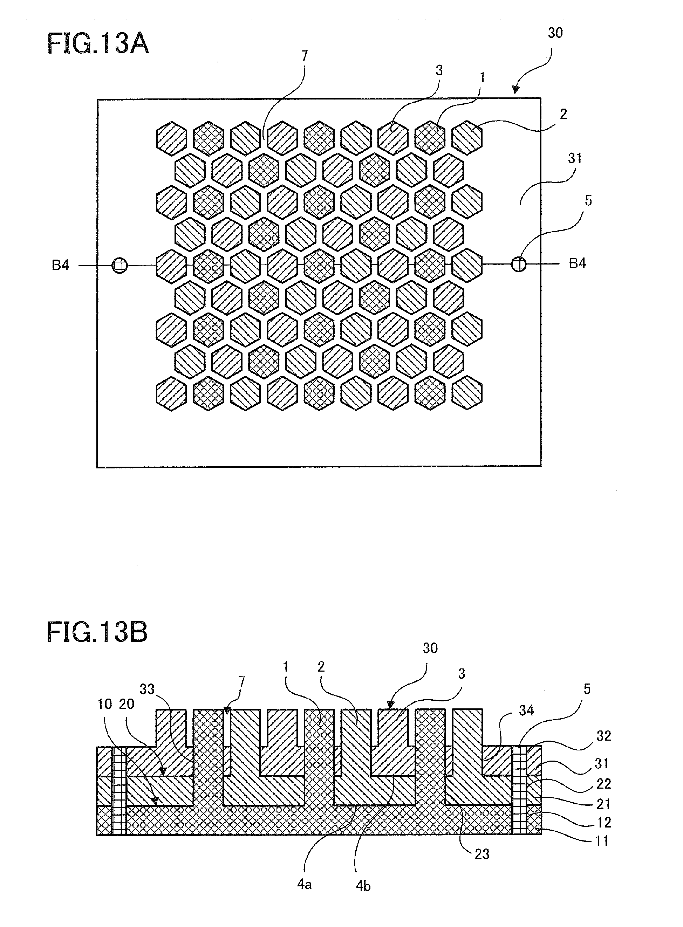

According to the fifth embodiment, the first member 10, second member 20, and third member 30 shown in FIGS. 10 to 12 are joined together to make a die M. FIG. 13 is a diagram showing a situation where the first member 10, the second member 20, and the third member 30 are joined together. FIG. 13A is a plane view of the situation where the first member 10, the second member 20, and the third member 30 are joined together. FIG. 13B is a cross-sectional view of FIG. 13A taken along B4-B4.

First, a step of processing the first member 10 shown in FIG. 10, and a step of processing the second member 20 shown in FIG. 11, and a step of processing the third member 30 shown in FIG. 12 are carried out. The step of processing the second member 20 contains a step of processing the first cell insertion holes 23. The step of processing the third member 30 contains a step of processing the first cell insertion holes 33 and the second cell insertion holes 34.

Then, a step of joining the first member 10, the second member 20, and the third member 30 together is carried out.

First, a step of inserting the first cells 1 of the first member 10 into the first cell insertion holes 23 of the second member 20 is performed. As a result, the first member 10 is stacked on the second member 20. In the situation where the first member 10 is stacked on the second member 20, the first through-holes 12 communicate with the second through-holes 22.

Then, a step of inserting the first cells 1 of the first member 10 into the first cell insertion holes 33 of the third member 30, and of inserting the second cells 2 of the second member 20 into the second cell insertion holes 34 of the third member 30 is carried out. In this state, the positions of the first member 10, second member 20, and third member 30 are determined. As shown in FIG. 13A, the first cells 1, the second cells 2, and the third cells 3 are accurately placed at positions corresponding to those of the structures.

Moreover, the first and second members 10 and 20 are stacked on the third member 30. In the situation where the first and second members 10 and 20 are stacked on the third member 30, the first, second, and third through-holes 12, 22, and 32 communicate with each other.

In this state, into the first, second and third through-holes 12, 22, and 32, connection members 5 are inserted. As the connection members 5 are inserted, the positions of the first member 10, second member 20, and third member 30 are determined. As shown in FIG. 13A, the first cells 1, the second cells 2, and the third cells 3 are even more accurately placed at positions corresponding to those of the structures. Incidentally, according to the present embodiment, the connection members 5 have a rod-shaped configuration to be inserted into the holes. Instead, the connection members 5 may have a configuration by which the first member 10, the second member 20, and the third member 30 are held therebetween in such a way as to align end portions of the first member 10, second member 20, and third member 30; any other configuration is available as long as the positions are determined.

In this state, the first plate section 11 of the first member 10 is in contact with the second plate section 21 of the second member 20, and the second plate section 21 of the second member 20 is in contact with the third plate section 31 of the third member 30.

Then, a section where the first plate section 11 is in contact with the second plate section 21 is regarded as a first joint surface 4a, and a section where the second plate section 21 is in contact with the third plate section 31 is regarded as a second joint surface 4b. A step of joining the first member 10, the second member 20, and the third member 30 to form molding grooves 7 of a predetermined depth between the first, second, and third cells 1, 2, and 3 is performed.

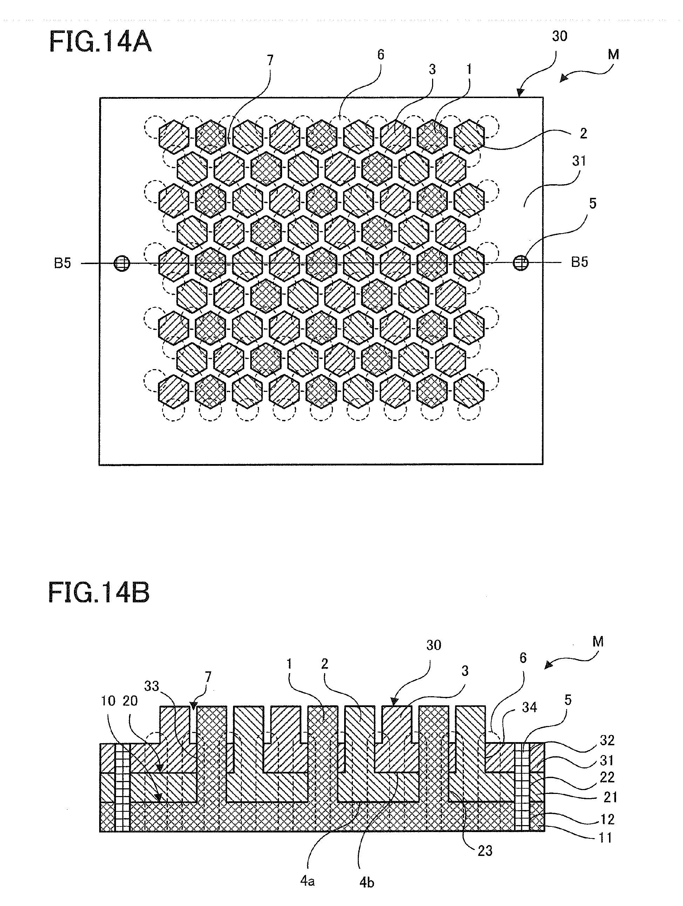

FIG. 14 is a diagram showing a structure-molding die of the fifth embodiment after the joining. FIG. 14A is a plane view of the situation where the first member 10, the second member 20, and the third member 30 have been joined together. FIG. 14B is a cross-sectional view of FIG. 14A taken along B5-B5.

The first cells 1, and the second cells 2, and the third cells 3 may be set in advance in such a way as to be equal in height, or may be adjusted by cutting or any other process at this stage in such a way as to be equal in height.

Then, a step of drilling or performing any other operation to provide supply holes 6, which are for supplying materials, in the first member 10 from the opposite surface of the first member 10 from the first, second, and third cells 1, 2, and 3 is performed.

The die M produced by such a method includes: a first member 10 that includes a first plate section 11 and a first cell 1 of a shape matching that of a to-be-molded structure; a second member 20 that includes a second cell 2 of a shape matching that of the to-be-molded structure and is joined to the first member 10; and a third member 30 that includes a third cell 3 of a shape matching that of the to-be-molded structure and is joined to the second member 20; molding grooves 7 that have a predetermined depth and are disposed between the first cell 1, the second cell 2, and the third cell 3; and a supply hole 6 that communicates with the first plate section 11 of the first member 1 at a predetermined intersection of the molding grooves 7 from an opposite side from the first cell 1 and the second and third cells 2 and 3 joined.

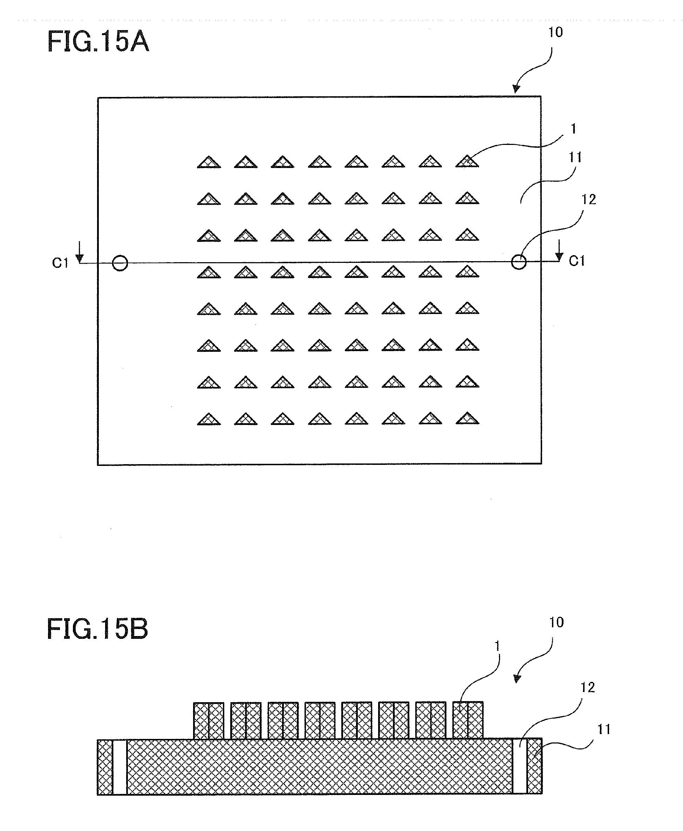

Then, a sixth embodiment of a production method of the structure-molding die M will be described. FIGS. 15 to 19 are diagrams showing the sixth embodiment of the production method of the structure-molding die. From the first embodiment to the fifth embodiment, the honeycomb-shaped cells are described. However, the present invention is not limited to the honeycomb shape; cells of a more complex shape may be created.

FIG. 15A is a plane view of a first member. FIG. 15B is a cross-sectional view of FIG. 15A taken along C1-C1. As shown in FIG. 15A, one plate-like first member 10 is cut and ground; and first cells 1 of a shape matching that of the structure, and a first plate section 11 are produced as an integral structure. Moreover, as shown in FIG. 15B, in the first plate section 11, first through-holes 12 are formed. According to the present embodiment, the first cells 1 are in the shape of a triangular prism.

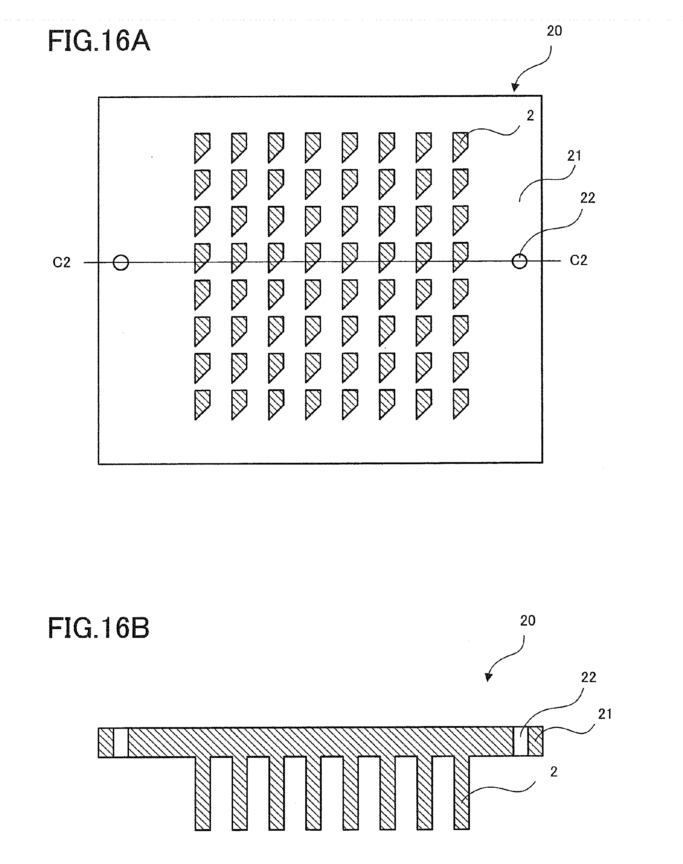

FIG. 16A is a plane view of a second member. FIG. 16B is a cross-sectional view of FIG. 16A taken along C2-C2. As shown in FIG. 16A, a second member 20 is cut and ground; and second cells 2 of a shape matching that of the structure, and a second plate section 21 are produced as an integral structure. Moreover, as shown in FIG. 16B, in the second plate section 21, second through-holes 22 are formed. Incidentally, the length of projections of the second cells 2 from the second plate section 21 is longer than the length of projections of the first cells 1 of the first member 10 from the first plate section 11 shown in FIG. 15B.

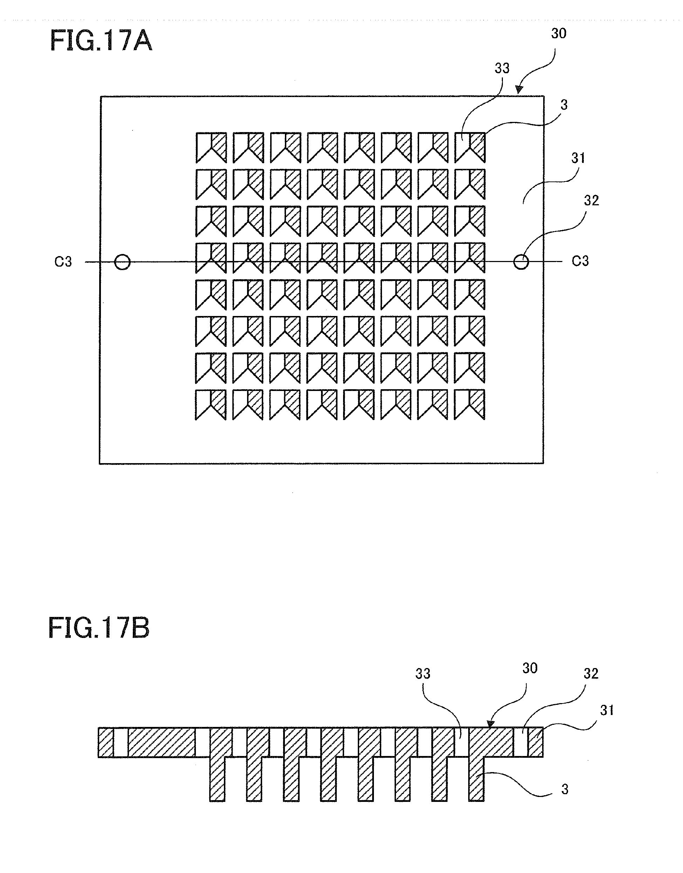

FIG. 17A is a plane view of a third member. FIG. 17B is a cross-sectional view of FIG. 17A taken along C3-C3. As shown in FIG. 17A, a third member 30 is cut and ground; and third cells 3 of a shape matching that of the structure, and a third plate section 31 are produced as an integral structure. Moreover, as shown in FIG. 17B, in the third plate section 31, third through-holes 32 are formed. Furthermore, second cell insertion holes 33 of a shape matching that of the structure are formed adjacent to the third cells 3 of the third plate section 31. Incidentally, the length of projections of the third cells 3 from the third plate section 31 is longer than the length of projections of the first cells 1 of the first member 10 from the first plate section 11 shown in FIG. 15B, and is shorter than the length of projections of the second cells 2 of the second member 20 from the second plate section 21 shown in FIG. 16B.

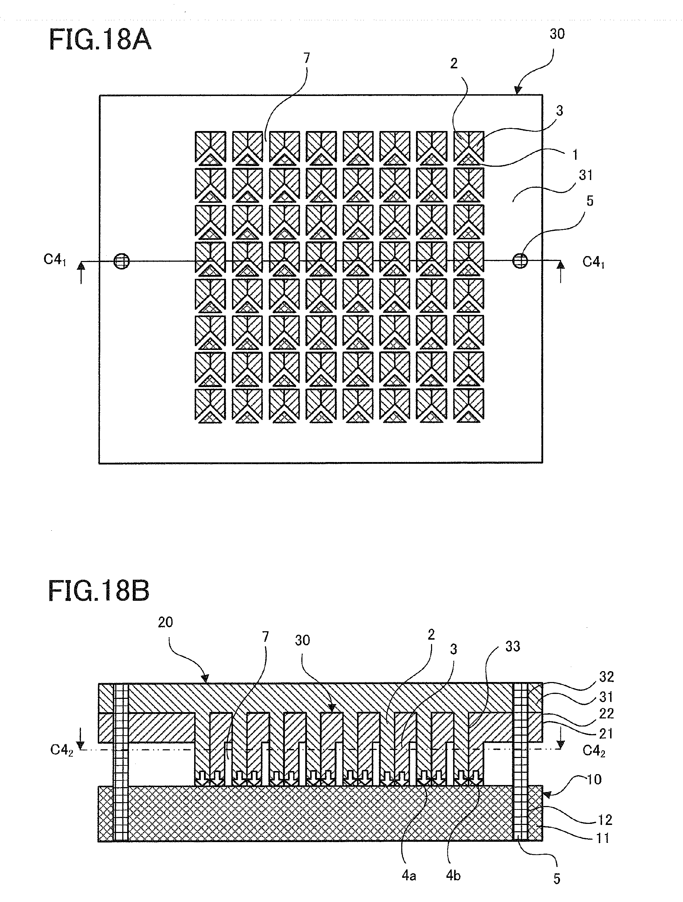

According to the sixth embodiment, the first member 10, second member 20, and third member 30 shown in FIGS. 15 to 17 are joined together to make a die M. FIG. 18 is a diagram showing a situation where the first member 10, the second member 20, and the third member 30 are joined together. FIG. 18A is a diagram showing a C4₂-C4₂ cross section of FIG. 18B seen from the direction of arrows, in a situation where the first member 10, the second member 20, and the third member 30 are joined together. FIG. 18B is a cross-sectional view of FIG. 18A taken along C4₁-C4₁ in the situation where the first member 10, the second member 20, and the third member 30 are joined together.

First, a step of processing the first member 10 shown in FIG. 15, and a step of processing the second member 20 shown in FIG. 16, and a step of processing the third member 30 shown in FIG. 17 are carried out. The step of processing the third member 30 contains a step of processing the second cell insertion holes 33.

Then, a step of joining the first member 10, the second member 20, and the third member 30 together is carried out.

At the joining step, first, a step of inserting the second cells 2 of the second member 20 into the second cell insertion holes 33 of the third member 30 is performed. As a result, the second member 20 is stacked on the third member 30. In the situation where the second member 20 is stacked on the third member 30, the second through-holes 22 communicate with the third through-holes 32.

Then, what is performed is a step of putting the stacked second and third members 20 and 30 on the first member 10 in such a way that the first cells 1 are disposed between the second cells 2 and the third cells 3.

In this state, into the second and third through-holes 22 and 32 that communicate with the first through-holes 12, connection members 5 are inserted. As the connection members 5 are inserted, the positions of the first member 10, second member 20, and third member 30 are determined. As shown in FIG. 18A, the first cells 1, the second cells 2, and the third cells 3 are accurately placed at positions corresponding to those of the structures. Incidentally, according to the present embodiment, the connection members 5 have a rod-shaped configuration to be inserted into the through-holes. Instead, the connection members 5 may have a configuration by which the first member 10, the second member 20, and the third member 30 are held therebetween in such a way as to align end portions of the first member 10, second member 20, and third member 30; any other configuration is available as long as the positions are determined.

In this state, the second cells 2 and the third cells 3 are in contact with the first plate section 11 of the first member 10. Incidentally, the first cells 1 may be in contact with the third plate section 31 of the third member 30, or stay away from the third plate section 31.

Then, a section where the second cell 2 is in contact with the first plate section 11 of the first member 10 is regarded as a first joint surface 4a, and a section where the third cell 3 is in contact with the first plate section 11 of the first member 10 is regarded as a second joint surface 4b. A step of joining the first member 10, the second member 20, and the third member 30 to form molding grooves 7 of a predetermined depth between the first, second, and third cells 1, 2, and 3 is performed.

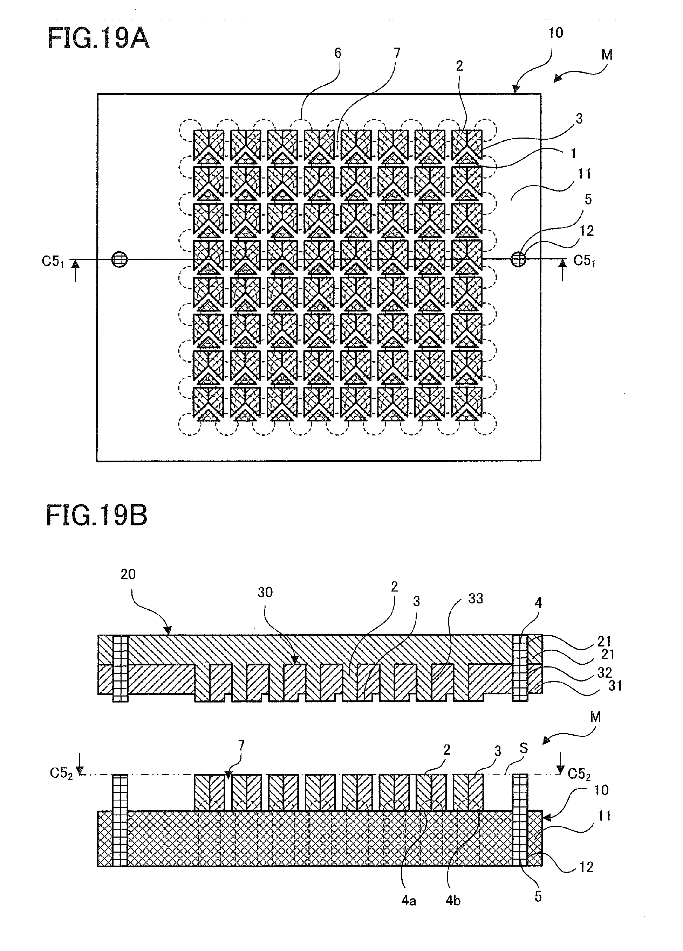

FIG. 19 is a diagram showing a structure-molding die of the sixth embodiment after the joining. FIG. 19A is a diagram showing a C5₂-C5₂ cross section of FIG. 19B seen from the direction of arrows, in a situation where the first member 10, the second member 20, and the third member 30 have been joined together. FIG. 19B is a cross-sectional view of FIG. 19A taken along C5₁-C5₁ in the situation where the first member 10, the second member 20, and the third member 30 have been joined together.

After the first member 10, the second member 20, and the third member 30 are joined together, a step of cutting the second and third cells 2 and 3 along a cutting plane S is carried out. It is preferred that the cutting plane S be a plane where the first cells 1, the second cells 2, and the third cells 3 are equal in height. For example, as shown in FIG. 19B, the second cells 2 and the third cells 3 may be cut in accordance with the height of the first cells 1; or the heights may be adjusted after the first cells 1, the second cells 2, and the third cells 3 all are cut. According to the present embodiment, the connection members 5 are cut together with the cells. However, the connection members 5 may be pulled out.

Then, a step of drilling or performing any other operation to provide supply holes 6, which are for supplying materials, in the first member 10 from the opposite surface of the first member 10 from the first, second, and third cells 1, 2, and 3 is performed. Incidentally, the step of forming the supply holes 6 may precede the step of cutting the second and third cells 2 and 3.

The die M produced by such a method includes: a first member 10 that includes a first plate section 11 and a first cell 1 of a shape matching that of a to-be-molded structure; a second member 20 that includes a second cell 2 of a shape matching that of the to-be-molded structure and is joined to the first member 10; and a third member 30 that includes a third cell 3 of a shape matching that of the to-be-molded structure and is joined to the first member 10; molding grooves 7 that have a predetermined depth and are disposed between the first cell 1, the second cell 2, and the third cell 3; and a supply hole 6 that communicates with the first plate section 11 of the first member 1 at a predetermined intersection of the molding grooves 7 from an opposite side from the first cell 1 and the second and third cells 2 and 3 joined.

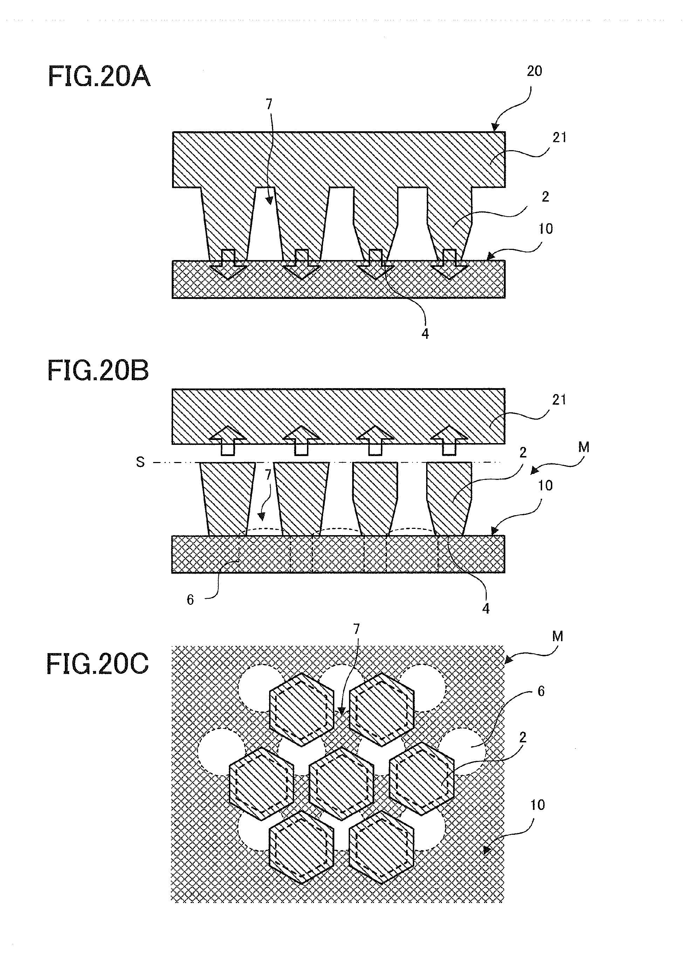

FIG. 20 is a diagram showing a structure-molding die of a seventh embodiment. FIG. 20A is a cross-sectional view when a first member 10 and a second member 20 are joined together. FIG. 20B is a cross-sectional view of the second member that is cut after the first member 10 and the second member 20 are joined together. FIG. 20C is a plane view of the structure-molding die.

According to the seventh embodiment, when the second member 20 is processed, cells 2 are formed in advance in such a way that a cross-sectional area of a side that is remote from a plate 21 is smaller than that of the plate 21's side. For example, as shown in FIG. 20A, the cells 2 are so formed as to taper in a direction away from the plate 21. Moreover, the cells 2 are so formed as to start tapering at a predetermined distance in the direction away from the plate 21.

Then, after the first member 10 and the second member 20 are joined together, a step of cutting the cells 2 along a cutting plane S is carried out. It is preferred that, for example, as shown in FIG. 20B, the cutting plane S be a plane near the boundary between the cells 2 and the plate 21.

Then, a step of drilling or performing any other operation to provide supply holes 6, which are for supplying materials, in the first member 10 from the opposite surface of the first member 10 from the cells 2 is performed. Incidentally, the step of forming the supply holes 6 may come before the step of cutting the cells 2.

A die M includes the first member 10; the second member 20 that has the cells 2 of a shape matching that of a to-be-molded structure and is joined to the first member 10; molding grooves 7 that have a predetermined depth and are disposed in the cells 2; and the supply holes 6 that communicate with the first member 10 at predetermined intersections of the molding grooves 7 from the opposite side from the cells 2. The cells 2 are formed in such a way that a cross-sectional area of a portion joined to the first member 10 is smaller than a cross-sectional area at the cutting plane S.

In the die M produced by the above method, the cells 2 are so formed that the cross-sectional area of the portion joined to the first member 10 is smaller than the cross-sectional area at the cutting plane S. Therefore, the supply holes 6 and the molding grooves 7 are made larger at the supply holes 6's side, making it possible to smoothly supply kneaded clay.

Moreover, when the second member 20 is cut to form the cells 2, the cutting is easy because portions corresponding to the molding grooves 7 are so shaped as to become narrower toward the plate 21.

Incidentally, the structure-molding die of the seventh embodiment is described based on the third embodiment shown in FIG. 4. However, the structure-molding dies of the other embodiments are available, too.

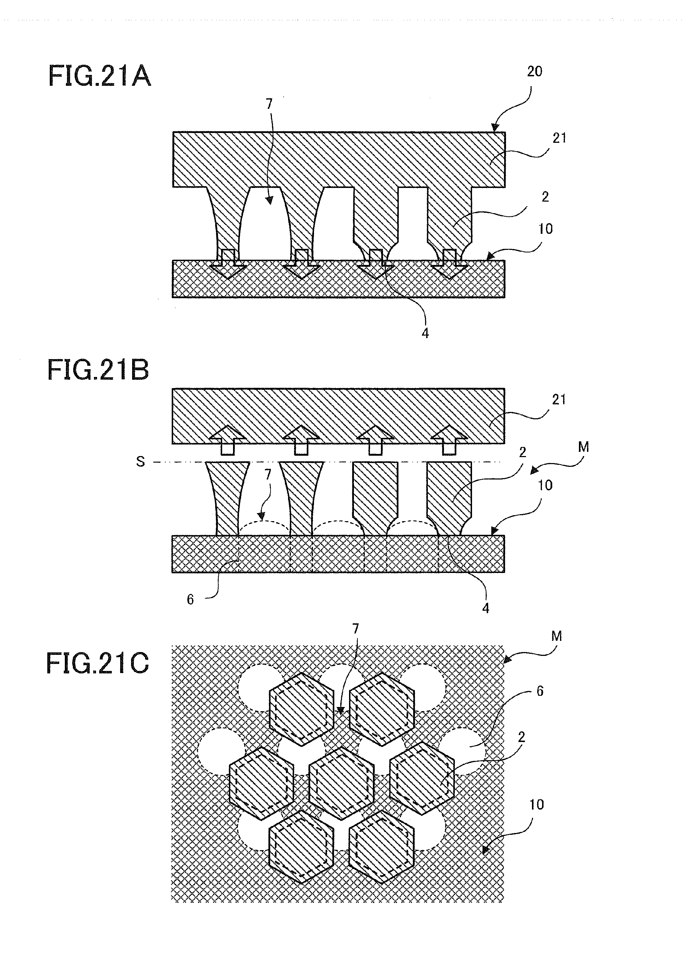

FIG. 21 is a diagram showing a structure-molding die of an eighth embodiment. FIG. 21A is a cross-sectional view when a first member 10 and a second member 20 are joined together. FIG. 21B is a cross-sectional view of the second member that is cut after the first member 10 and the second member 20 are joined together. FIG. 21C is a plane view of the structure-molding die.

According to the eighth embodiment, when the second member 20 is processed, cells 2 are formed in advance in such a way that a cross-sectional area of a side that is remote from a plate 21 is smaller than that of the plate 21's side. For example, as shown in FIG. 21A, the cells 2 are so formed as to have a curved surface and a smaller cross-sectional area in a direction away from the plate 21. Moreover, the cells 2 are so formed as to start to have a curved surface at a predetermined distance, as well as to have a smaller cross-sectional area in the direction away from the plate 21.

Then, after the first member 10 and the second member 20 are joined together, a step of cutting the cells 2 along a cutting plane S is carried out. It is preferred that, for example, as shown in FIG. 21B, the cutting plane S be a plane near the boundary between the cells 2 and the plate 21.

Then, a step of drilling or performing any other operation to provide supply holes 6, which are for supplying materials, in the first member 10 from the opposite surface of the first member 10 from the cells 2 is performed. Incidentally, the step of forming the supply holes 6 may come before the step of cutting the cells 2.

A die M includes the first member 10; the second member 20 that has the cells 2 of a shape matching that of a to-be-molded structure and is joined to the first member 10; molding grooves 7 that have a predetermined depth and are disposed in the cells 2; and the supply holes 6 that communicate with the first member 10 at predetermined intersections of the molding grooves 7 from the opposite side from the cells 2. The cells 2 are formed in such a way that a cross-sectional area of a portion joined to the first member 10 is smaller than a cross-sectional area at the cutting plane S.

In the die M produced by the above method, the cells 2 are so formed that the cross-sectional area of the portion joined to the first member 10 is smaller than the cross-sectional area at the cutting plane S. Therefore, the supply holes 6 and the molding grooves 7 are made larger at the supply holes 6's side, making it possible to smoothly supply kneaded clay.

Moreover, when the second member 20 is cut to form the cells 2, the cutting is easy because portions corresponding to the molding grooves 7 are so shaped as to become narrower toward the plate 21.

Incidentally, the structure-molding die of the eighth embodiment is described based on the third embodiment shown in FIG. 4. However, the structure-molding dies of the other embodiments are available, too.

Such die production methods lead to a shorter production time and a low-cost and highly-precise structure-molding die.

Each of the above embodiments may be modified in various ways in accordance with a configuration disclosed in the appended claims.

### Explanation of Reference Symbols

- 1:: First cell
- 2:: Cell (Second member), Second cell
- 3:: Third cell
- 4:: Joint surface
- 5:: Connection member
- 6:: Supply hole
- 7:: Molding groove
- 10:: Base, First member
- 20:: Second member
- 30:: Third member

## Claims

1. A die, **characterized by** comprising:
a plate-like first member (10) that serves as a base;
a second member (20) that has cells of a shape matching a to-be-molded structure and is joined to the first member (10);
molding grooves (7)that have a predetermined depth and are disposed between the cells; and
a supply hole (6) that communicates with the first member (10) at a predetermined intersection of the molding grooves (7) from an opposite side from the cells joined.

2. A die, **characterized by** comprising:
a first member that has a plate section and a first cell (1) of a shape matching a to-be-molded structure;
a second member that has a second cell (2) of a shape matching the to-be-molded structure and is joined to the first member;
molding grooves (7) that have a predetermined depth and are disposed between the first cell and the second cell; and
a supply hole (6) that communicates with the plate section of the first member at a predetermined intersection of the molding grooves from an opposite side from the first cell and the second cell joined.

3. A die, **characterized by** comprising:
a first member (10) that has a first plate section and a first cell of a shape matching a to-be-molded structure;
a second member (20) that has a second plate section and a second cell of a shape matching the to-be-molded structure, and is joined with the second cell being inserted into the first member;
molding grooves (7) that have a predetermined depth and are disposed between the first cell and the second cell; and
a supply hole (6) that communicates with the first plate section of the first member and the second plate section of the second member at a predetermined intersection of the molding grooves from an opposite side from the first cell and the second cell.

4. A method of producing a die, **characterized by** comprising:
a first step of processing a first member that serves as a base;
a second step of processing cells of a shape matching a structure that is to be molded at a second member;
a third step of joining the second member to the first member in such a way as to form molding grooves of a predetermined depth between the cells; and
a fourth step of making a supply hole communicate with the first member at a predetermined intersection of the molding grooves from an opposite side from the cells joined.

5. A method of producing a die, **characterized by** comprising:
a first step of processing a first plate section of a first member and a first cell of a shape matching a to-be-molded structure;
a second step of processing a second plate section of a second member and a second cell of a shape matching the to-be-molded structure;
a third step of joining the second member to the first member in such a way as to form molding grooves of a predetermined depth between the first cell and the second cell; and
a fourth step of making a supply hole communicate with the plate section of the first member at a predetermined intersection of the molding grooves from an opposite side from the first cell and the second cell joined.

6. The method of producing the die according to claim 5, **characterized in that**
the fourth step includes a step of cutting off the second plate section.

7. The method of producing the die according to claim 5 or 6, **characterized in that**:
the second step includes a step of processing, in the second plate section, a first cell insertion hole into which the first cell is inserted; and
the third step includes a step of inserting the first cell into the first cell insertion hole.
